# EUROPEAN PATENT SPECIFICATION

(11) **EP 1 776 426 B1**
(45) Date of publication and mention of the grant of the patent: **20.02.2008**
(21) Application number: 05766963.2
(22) Date of filing: 15.06.2005
(51) Int. Cl.: C09D 5/03

(54) **PROCESS FOR THE PREPARATION OF POWDER COATINGS**
VERFAHREN ZUR HERSTELLUNG VON PULVERLACKEN
PROCEDE D'ELABORATION DE REVETEMENTS EN POUDRE

(30) Priority: 15.06.2004 US 579641 P
(43) Date of publication of application: 25.04.2007
(73) Proprietor: E. I. DU PONT DE NEMOURS AND COMPANY, Wilmington, Delaware 19898 (US)
(72) Inventor: BOLM, Helene, S-SE-593 37 Vaestervik (SE); WILKENHOENER, Uwe, 42107 Wuppertal (DE); WULF, Martin, 40764 Langenfeld (DE)
(74) Representative: Biering, Christine
(86) International application number: PCT/US2005/021240
(87) International publication number: WO 2005/123848

(56) References cited:
- WO-A-20/04081100
- US-A- 5 824 373
- US-A- 6 017 593
- JIRI GEORGE DROBNY: "Radiation Technology for Polymers" 2003, CRC PRESS LLC , BOCA RATON LONDON NEW YORK WASHINGTON D.C. , XP002367369 7.7.3 POWDER COATING APPLICATION

## Description

### Field of the Invention

The invention relates to a process of preparation of gloss-controlled powder coatings on different substrates.

### Description of Related Art

Powder coatings which can be cured by ultraviolet (UV) light have been under development for many years. Typically, these compositions contain a binder resin with ethylenically unsaturated groups and a specific photoinitiator to imitate the photo-polymerization. This renders it possible to cure such compositions in a very short time and to improve quality and productivity with low operating and equipment costs.
Typically, UV-radiation curable powder coating compositions use two separate processes, the heating to cause the powder particles to fuse, to melt and flow out, and the UV or electron-beam irradiation to polymerize and cross-link the coatings structure.

Gloss-control and, especially, matting of UV-powder coatings and keeping these superior technology properties of the UV-coating are currently still difficult tasks.

The use of matting agents to adjust the gloss to the desired level is well known, see WO 03/102048, US2003134978, EP-A 1 129 788 and EP-A 947 254. Examples for such agents are waxes, silica, glass pearls, and crystalline resins. Such compositions often lead to coatings with a loss in technological properties.

Other techniques for forming a matting effect are the use of dry-blends of chemically incompatible powders or the use of different process conditions, such as different curing conditions, that means, stepwise curing of the melted coating with lamps having different wavelength, see EP-A 0706 834, or the use of special UV-lamps under inert conditions. However, these processes are often difficult to control or are inefficient.

US 6,017,593 discloses a method for producing low gloss coatings with a UV curable powder coating composition containing a crystalline resin wherein the UV radiation is used to cure the coating. In J.G. Drobny "Radiation Technology for Polymers", 2003, CRC Press LLC, powder coating applications are exposed to heat to achieve a molten film and then to UV-radiation to cure the molten film (see 7.7.3). US 5,824,373 refers to radiation curing of powder coatings on wood using a specific coating composition, heating the coated substrate and then curing the coating with UV-radiation.

### Summary of the Invention

The invention relates to a process for the preparation of powder coatings with any desired gloss level adjusted in the range of 1 to 95 whereby a matt finish has a gloss in the range of 1-20, a high gloss finish has a gloss in the range of 60-95, and a low gloss finish in the range of 20-40 comprising the following steps of:
a) applying the powder coating composition onto the substrate surface,
b) irradiating the applied powder coating composition with high energy radiation under near-ambient temperature, in the range of 15 to 30°C,
c) fusing, melting and flowing out the particles of the powder coating composition by increased temperature to a molten coating, and
d) curing the molten coating.

The process according to the invention makes it possible to control the gloss of the coating to any level, by varying the time period and the intensity of the UV-irradiation in step b).

With the above described process, no change in formulation of the UV-powder coating composition is necessary to achieve the desired gloss level. Hence, the technological properties of the cured coating, such as abrasion, scratch and scuff resistance, leveling, outdoor stability, chemical resistance and hardness remain at the original level.

### Detailed Description of the Invention

The features and advantages of the present invention will be more readily understood, by those of ordinary skill in the art, from reading the following detailed description. It is to be appreciated those certain features of the invention, which are, for clarity, described above and below in the context of separate embodiments, may also be provided in combination in a single embodiment. Conversely, various features of the invention that are, for brevity, described in the context of a single embodiment, may also be provided separately or in any sub-combination. In addition, references in the singular may also include the plural (for example, "a" and "an" may refer to one, or one or more), unless the context specifically states otherwise.

The use of numerical values in the various ranges specified in this application, unless expressly indicated otherwise, are stated as approximations as though the minimum and maximum values within the stated ranges were both preceded by the word "about." In this manner, slight variations above and below the stated ranges can be used to achieve substantially the same results as values within the ranges. Also, the disclosure of these ranges is intended as a continuous range including every value between the minimum and maximum values,

The gloss of finishes prepared according to this invention is measured at 60° according to DIN 67 530 and is adjusted in the range of 1 to 95 by using the process. A matt finish has a gloss in the range of 1-20, a high gloss finish has a gloss in the range of 60-95, and a low gloss finish in the range of 20-40.

The present invention is based upon the process wherein the level of gloss of a powder coating can be controlled by varying the procedure of irradiation of the dry, applied powder coating composition with high energy radiation in step b).

In this step the irradiation is used under near-ambient temperature, that means, temperatures below the glass transition temperature of the coating, e.g. in the range of 15 to 30°C.

Following the irradiation with high energy in step b), the powder coating particles are fused, molten and flowed out by increased temperature. This can be done, e.g., by IR-radiation, IR-radfation combined with hot-air convection, or hot-air convection. IR radiation includes also Near-Infrared radiation (NIR). Typically IR radiation uses wavelengths in the range of 0.76 µm to 1mm and NIR radiation used wavelengths in the range of 0.76 to 1.2 µm, The melting temperature, for example, may be in the range of 60 to 250 °C, measured as substrate surface temperature.

Following step c) the molten powder coating is cured. This can be done by high energy radiation again. It is also possible to expose the applied and melted powder coating layer to thermal energy. The coating layer may, for example, be exposed by convective and/or radiant heating to temperatures of approximately 60 to 250 °C, preferably of 80 to 160°C, measured as substrate surface temperature. Exposing to thermal energy before, during and/or after irradiation with high energy radiation is also possible.

UV (ultraviolet) -radiation or electron beam radiation may be used as high-energy radiation. UV-radiation is preferred. Irradiation may proceed continuously or discontinuously, that means in cycles.

Irradiation may be carried out, for example, in a belt unit fitted with one or more UV-radiation emitters or with one or more UV-radiation emitters positioned in front of the object to be irradiated, or the area to be irradiated, or the substrate to be irradiated and/or the UV-radiation emitters are moved relative to one another during irradiation.

In principle the duration of irradiation distance from the object and/or radiation output of the UV-radiation emitter may be varied during UV irradiation. The preferred source of radiation comprises UV-radiation sources emitting in the wavelength range from 180 to 420 nm, in particular from 200 to 400 nm. Examples of such UV-radiation sources are optionally doped high, medium and low pressure mercury vapor emitters and gas discharged tubes, for such as, for example, low pressure xenon lamps. Apart from these continuously operating UV-radiation sources, however, it is also possible to use discontinuous UV-radiation sources. These are preferably so-called high-energy flash devices (UV-flash lamps for short). The UV-flash lamps may contain a plurality of flash tubes, for example quartz tubes filled with inert gas, such as xenon.

The distance between the UV-radiation sources and the substrate surface to be irradiated may be, for example, 0.5 to 300 cm.

Irradiation with UV-radiation may proceed in one or more irradiation steps. In other words, the energy to be applied by irradiation may be supplied completely in a single irradiation step or in portions in two or more irradiation steps. UV doses of 1000 to 5000 mJ/cm² are typical.

For step b), the irradiation time with UV-radiation may be for example in the range from 1 millisecond to 300 seconds, preferably from 0.1 to 60 seconds, depending on the number of flash discharges selected. If continuous UV-radiation sources are used, the irradiation time for step b) may be for example in the range from 0.5 seconds to 30 minutes, preferably less than 1 minute.

The UV dose, which is typically referred to as the time integral of irradiance, is an important parameter that affects especially the irradiating efficiency in the step b). To achieve different gloss levels as desired the UV dose can be varied from low to high dose. In this way it is possible to achieve a matt powder coating by pre-crosslinkage of the dry powder particles. The degree of pre-crosslinkage depends on the UV dose as well as also on the properties of the UV-curable powder coating composition. In principle, lower gloss coatings are achieved by higher UV dose in step b) whereas a higher gloss powder coatings are obtained by a lower UV dose in step b). The UV doses used in step b) of the process according to the invention are in the range of 20 to 300 mJ/cm², preferably 50 to 150 mJ/cm2

Suitable powder coating binders with ethylenically unsaturated groups are, for example, any powder coating binder known to the skilled person which can be crosslinked by free-radical polymerization. These powder coating binders can be prepolymers, such as polymers and oligomers, containing, per molecule, one or more, free-radically polymerizable olefinic double bonds.

Examples of powder coating binders curable by free-radical polymerization include those based on epoxy, polyester, acrylic and/or urethane resins. Examples of such photopolymerizable resins include unsaturated polyesters, unsaturated (meth)acrylates, unsaturated polyester-urethanes, unsaturated (meth)acrylic-urethanes, epoxies, acrylated epoxies, epoxy-polyesters, polyester-acrylics, epoxy-acrylics.

(Meth)acrylic is respectively intended to mean acrylic and/or (meth)acrylic.

In addition to the resins the powder coating compositions of this invention may contain additives that are conventional used in powder coating compositions. Examples of such additives include fillers, extenders, flow additives, photoinitiators, catalysts, hardeners, dyes and pigments. Compounds having anti-microbial activity may also be added to the powder coating compositions.

The powder coating compositions may contain photoinitiators in order to initiate the free-radical polymerization. Suitable photoinitiators include, for example, those which absorb in the wavelength range from 190 to 600 nm. Examples for photoinitiators for free-radically curing systems are benzoin and derivatives, acetophenone and derivatives, benzophenone and derivatives, thioxanthone and derivatives, anthraquinone, organo phosphorus compounds, such as for example, acyl phosphine oxides.

The photoinitiators are used, for example, in quantities of 0.1 to 7 weight-%, relative to the total of resin solids and photoinitiators. The photoinitiators may be used individually or in combination.

The powder coating compositions may comprise pigmented or unpigmented powder coating agents for producing any desired coating layer of a one-layer coating or a multilayer coating. The compositions may contain transparent, color-imparting and/or special effect-imparting pigments and/or extenders. Suitable color-imparting pigments are any conventional coating pigments of an organic or inorganic nature. Examples of inorganic or organic color-imparting pigments are titanium dioxide, micronized titanium dioxide, carbon black, azopigments, and phthalocyanine pigments. Examples of special effect-imparting pigments are metal pigments, for example, made from aluminum, copper or other metals, interference pigments, such as metal oxide coated metal pigments and coated mica. Examples of usable extenders are silicon dioxide, aluminum silicate, barium sulfate, and calcium carbonate.

The additives are used in conventional amounts known to the person skilled in the art.

The powder coating composition may contain also further binder resins, such as thermosetting resins, such as in amounts of, e.g., 0 to 90 wt %, relative to the total resin solids, to make dual curing possible if desired. Such resins may be, for example, epoxy, polyester, (meth)acrylic and/or urethane resins.

The powder coating compositions are prepared by conventional manufacturing techniques used in the powder coating industry. For example, the ingredients used in the powder coating composition, can be blended together and heated to a temperature to melt the mixture and then the mixture is extruded. The extruded material is then cooled on chill roles, broken up and then ground to a fine powder, which can be classified to the desired grain size, for example, to an average particle size of 20 to 200 microns.

The powder coating composition of this invention may be applied by electrostatic spraying, thermal or flame spraying, or fluidized bed coating methods, all of which are known to those skilled in the art. The coatings may be applied to metallic and/or non-metallic substrates or as a coating layer in a multi-layer film build.

In certain applications, the substrate coated by the process may be preheated before the application of the powder, and then either heated after the application of the powder or not. For example, gas is commonly used for various heating steps, but other methods, e.g., microwaves, IR or NIR are also known. Also a primer can be applied, which seals the surface and provides the required electrical conductivity. UV-curable primers are also available.

Substrates, which may be considered, are metal, wooden substrates, wood fiber material, paper or plastic parts, for example, also fiber re-inforced plastic parts, for example, automotive and industrial bodies or body parts.

The process according to the invention provides powder coatings with a controlled gloss surface effect while minimizing or eliminating the negative effects of the prior art attempts at controlling gloss, e.g., loss of coating flow and creation of "orange peel" surface effect, loss of abrasion, scratch and scuff resistance, lower outdoor stability, lower chemical resistance and hardness.

The process according to the invention provides coatings which a have a rough or textured surface microscopically which is seen as low gloss, but otherwise appears smooth to the naked eye.

The present invention is further defined in the following Examples. It should be understood that these Examples are given by way of illustration only.

The following Examples illustrate the invention. All parts and percentages are on a weight basis unless otherwise indicated.

### Examples

### Example 1

### Manufacturing of powder coatings with different gloss levels according to the invention

A clear coat composition is formulated by dry-mixing of 97 wt% of Uvecoat® 1000 (UCB Surface Specialties), an unsaturated polyester with methacrylate groups, 2 wt% of Irgacure® 2959 (Ciba) as photoinitiator and 1 wt% of Powdermate® EX-486 (Troy Chemical Company) as flow additive.

A white topcoat composition is formulated by dry-mixing of 83,8 wt% of Uvecoat® 1000, 15 wt% of Ti-Pure® R-902 (DuPont), a titanium dioxide, 0,5 wt% of Irgacure® 819 (Ciba) and 0,2 wt% of Irgacure® 2959 (Ciba) as photoinitiators, as well as 0,5 wt% of Resiflow® PV 88 (Worlee) as flow additive.

Each coating composition is charged into a twin screw extruder at a temperature setting of the extruder of 70-85 °C. After extrusion, the melt is cooled down on a cooling belt and the resulted product is then crushing to small chips. The chips are milled to a suitable particle size distribution suitable for spraying, in a range of 20-80 µm.

Afterwards the powders are sprayed onto metal coil test panels with a tribo charge spray gun, to a film thickness of 80 to 90 µm.

Each applied powder is irradiated, in a dry state, with a medium-pressure Mercury (Hg) lamp (Fusion 240 W/cm emitters), using different UV doses.

After that, the melting of the irradiated powder is done with a combination of IR and convection heat to a substrate surface temperature of about 120 to 140 °C within a time range of about 4 minutes.

The curing of the melted coating occurs by UV irradiation with a medium pressure Gallium lamp (100 W/cm emitters, company IST). The UV dose for the curing step should be adjusted so the coating is fully cured; typically, with a UV dose of 3000 mJ/cm² or higher (measured from 200 to 390 nm wavelength).

### Example 2

### Manufacturing of powder coating compositions according to the prior art

The manufacture, application and curing process of the clear coat composition and the white topcoat composition is the same as mentioned in example 1, but without any UV irradiation of the dry, applied powder on the substrate prior to melting the powder.

### Example 3

### Testing of the Coatings

**Table 1:**

| **Examples** | **UV dose [mJ/cm²]** | **60° gloss (*)** | **Flexibility (Erichson) (**)** | **Pendulum hardness (sec) ISO 1522** |
|---|---|---|---|---|
| **Example 1, clear coat** | 176 | 7.6 | > 8 | 68 |
| | 122 | 13.9 | > 8 | 87 |
| | 93 | 37.7 | > 8 | 106 |
| | | | | |
| **Example 2, clear coat** | --- | 72 | > 8 | 121 |
| | | | | |
| **Example 1, topcoat** | 420 | 4.3 | > 8 | 104 |
| | 358 | 24.9 | > 8 | 125 |
| | 240 | 46.4 | > 8 | 170 |
| | | | | |
| **Example 2, topcoat** | --- | 90.6 | > 8 | 210 |

| | | | | |
|---|---|---|---|---|
| (*) measured in accordance with DIN 67 530 (**) measured in accordance with DIN EN ISO 1520 | | | | |

The above data in Table 1 show that as the UV dose is increased the 60° gloss of the coating was reduced illustrating that gloss can be controlled using various levels of UV dose showing identical flexibility properties of the coating as well as the required hardness.

## Claims

1. A process for the preparation of powder coatings with any desired gloss level adjusted in the range of 1 to 95 whereby a matt finish has a gloss of 1-20, a high gloss finish has a gloss of 60-95 and a low gloss finish in the range of 20-40 comprising the following steps of:
a) applying the powder coating composition onto the substrate surface,
b) irradiating the applied powder coating composition with high energy radiation under near-ambient temperature, in the range of 15 to 30 °C,
c) fusing, melting and flowing out the particles of the powder coating composition by increased temperature to a molten coating, and
d) curing the molten coating.

2. The process according to claim 1 wherein the applied powder coating composition is irradiated in step b) with a UV dose in the range of 50 to 150 mJ/cm².

3. The process according to claim 2 wherein the irradiation time Is In the range of 0.1 to 60 seconds.

4. The process according to claim 2 wherein the irradiation time is in the range of 0.5 seconds to 30 minutes.

5. The process according to claim 1 wherein fusing, melting and flowing in step c) can be done by IR radiation, IR-radiation combined with hot-air convection, or hot-air convection.

6. A substrate coated by the process according to claim 1.

7. The substrate according to claim 6 wherein the substrate is preheated before the application of the powder coating composition.

## Patentansprüche

1. Verfahren zur Herstellung von Pulverlacken mit beliebigen gewünschten, auf einen Bereich von 1 bis 95 eingestellten Glanzwerten, wobei ein matte Oberfläche einen Glanz von 1 bis 20 hat, eine hochglänzende Oberfläche einen Glanz von 60 bis 95 hat und eine wenigglänzende Oberfläche einen Glanz im Bereich von 20 bis 40, welches Verfahren die Schritte umfasst:
a) Auftragen einer Pulverlackzusammensetzung auf die Substratoberfläche,
b) Bestrahlen der aufgebrachten Pulverlackzusammensetzung mit Hochenergiestrahlung unter Nahe-Umgebungstemperatur im Bereich von 15° bis 30°C;
c) mit Hilfe erhöhter Temperatur die Partikel der Pulverlackzusammensetzung zu einer schmelzflüssigen Beschichtung Zusammenschmelzen, Schmelzen und Auseinanderfließenlassen;
d) Härten der schmelzflüssigen Beschichtung.

2. Verfahren nach Anspruch 1, bei welchem die in Schritt b) aufgebrachte Pulverlackzusammensetzung mit einer UV-Dosis im Bereich von 50 bis 150 mJ/cm² bestrahlt wird.

3. Verfahren nach Anspruch 2, bei welchem die Bestrahlungsdauer im Bereich von 0,1 bis 60 Sekunden liegt.

4. Verfahren nach Anspruch 2, bei welchem die Bestrahlungsdauer im Bereich von 0,5 Sekunden bis 30 Minuten liegt.

5. Verfahren nach Anspruch 1, bei welchem das Zusammenschmelzen, Schmelzen und Verlaufen in Schritt c) mit Hilfe von IR-Strahlung ausgeführt werden kann, mit Hilfe von IR-Strahlung in Kombination mit Heißluftkonvektion oder mit Hilfe von Heißluftkonvektion.

6. Substrat, beschichtet mit Hilfe des Verfahrens nach Anspruch 1.

7. Substrat nach Anspruch 6, wobei das Substrat vor dem Auftragen der Pulverlackzusammensetzung vorerhitzt wird.

## Revendications

1. Procédé pour la préparation de revêtements en poudre avec n'importe quel niveau de brillant souhaité ajusté dans la plage de 1 à 95 moyennant quoi un fini mat présente un brillant de 1 à 20, un fini très brillant présente un brillant de 60 à 95 et un fini peu brillant dans la plage de 20 à 40 comprenant les étapes suivantes consistant à:
(a) appliquer la composition de revêtement en poudre sur la surface d'un substrat,
(b) irradier la composition de revêtement en poudre appliquée avec un rayonnement de forte énergie sous une température quasi-ambiante, dans la plage de 15 à 30 °C,
(c) combiner, fondre et faire s'écouler les particules de la composition de revêtement en poudre par une température accrue en un revêtement fondu, et
(d) durcir le revêtement fondu.

2. Procédé selon la revendication 1, dans lequel la composition de revêtement en poudre appliquée est irradiée à l'étape b) avec une dose d'UV dans la plage de 50 à 150 mJ/cm².

3. Procédé selon la revendication 2, dans lequel la durée d'irradiation est dans la plage de 0,1 à 60 secondes.

4. Procédé selon la revendication 2, dans lequel la durée d'irradiation est dans la plage de 0,5 seconde à 30 minutes.

5. Procédé selon la revendication 1, dans lequel la combinaison, la fusion et l'écoulement à l'étape (c) peuvent être réalisés par un rayonnement IR, un rayonnement IR combiné à une convection d'air chaud, ou une convection d'air chaud.

6. Substrat recouvert par le procédé selon la revendication 1.

7. Procédé selon la revendication 6, dans lequel le substrat est préchauffé avant l'application de la composition de revêtement en poudre.
